# EUROPÄISCHE PATENTANMELDUNG

(11) **EP 3 620 301 A2**
(43) Veröffentlichungstag der Anmeldung: **11.03.2020**
(21) Anmeldenummer: 19192021.4
(22) Anmeldetag: 16.08.2019
(51) Int. Cl.: B32B 38/00, B29C 59/08, B29C 41/00

(54) **VERFAHREN ZUR MODIFIKATION UND BESCHICHTUNG VON OBERFLÄCHEN VON POLYMERMATERIALIEN, POLYMERMATERIAL UND VORRICHTUNG**

(30) Priorität: 17.08.2018 DE 102018213856
(71) Anmelder: FRAUNHOFER-GESELLSCHAFT zur Förderung der angewandten Forschung e.V., 80686 München (DE)
(72) Erfinder: Holländer, Andreas, 14109 Berlin (DE)
(74) Vertreter: Pfenning, Meinig & Partner mbB

(57) **Zusammenfassung**

Die vorliegende Erfindung betrifft ein Verfahren zur Modifikation von Oberflächen von Polymermaterialien. Hierbei wird eine kombinierte Flammenbehandlung der Oberfläche des Polymermaterials und die Behandlung der Oberfläche des Polymermaterials mit einem Reaktivstoff durchgeführt, wobei eine Beschichtung der Oberfläche des Polymermaterials erfolgt. Zudem betrifft die vorliegende Erfindung ein entsprechend hergestelltes Polymermaterial sowie eine Vorrichtung zur Durchführung des voranstehend beschriebenen Verfahrens. Die vorliegende Erfindung betrifft ferner ein Verfahren zur Beschichtung von Oberflächen von Polymermaterialien, bei dem ein mit dem eingangs beschriebenen Verfahren modifiziertes Polymermaterial mit einem Beschichtungsstoff beschichtet wird.

## Beschreibung

Die vorliegende Erfindung betrifft ein Verfahren zur Modifikation von Oberflächen von Polymermaterialien. Hierbei wird eine kombinierte Flammenbehandlung der Oberfläche des Polymermaterials und die Behandlung der Oberfläche des Polymermaterials mit einem Reaktivstoff durchgeführt, wobei eine Beschichtung der Oberfläche des Polymermaterials erfolgt. Zudem betrifft die vorliegende Erfindung ein entsprechend hergestelltes Polymermaterial sowie eine Vorrichtung zur Durchführung des voranstehend beschriebenen Verfahrens. Die vorliegende Erfindung betrifft ferner ein Verfahren zur Beschichtung von Oberflächen von Polymermaterialien, bei dem ein mit dem eingangs beschriebenen Verfahren modifiziertes Polymermaterial mit einem Beschichtungsstoff beschichtet wird.

Viele technisch wichtige Polymermaterialien zeichnen sich durch einen kleinen Wert der freien Oberflächenenergie aus. Die Oberflächen werden daher aktiviert, um sie z.B. bedrucken, laminieren oder verkleben zu können. Elektrische Entladungen wie die Corona (Barriereentladung) werden zu diesem Zweck im großen Umfang industriell eingesetzt. Auch die Behandlung mit Flammen findet vielfältig Anwendung. Ziel ist es in allen Fällen, möglichst effizient die Oberfläche des Polymermaterials zu oxidieren. In den elektrischen Entladungen und auch in Flammen werden hoch reaktive Substanzen wir z.B. Radikale erzeugt, die diese Oxidation bewirken.

Leider sind die Effekte der Aktivierung nicht stabil. Je nach Polymertyp lässt der Aktivierungseffekt über kurz oder lang nach. In der Vergangenheit wurden verschiedene Ansätze verfolgt, dieses Problem abzumildern oder gar zu beheben, die nachfolgend aufgelistet sind:
a) Behandlung im Niederdruckplasma (mit nicht polymerisierbaren Substanzen)
b) Glimmentladung statt filamentierter Corona-Entladung durch Stickstoff, Argon, Helium anstatt Luft, andere Ausführung des Behandlungsgerätes (remote treatment)
c) Zusatz von Aerosolen von nicht polymerisierbaren Substanzen zu Corona-Behandlungsprozessen (DE 102009044638)
d) Abscheidung von Schichten
   ∘ durch Niederdruckprozesse (PECVD) aus gasförmigen Stoffen oder verdampfbaren Stoffen
   ∘ Atmosphärendruck-Abscheidungen aus gasförmigen Stoffen oder verdampfbaren Stoffen
   ∘ Zusatz von Aerosolen von polymerisierbaren Substanzen zu Corona-Behandlungsprozessen (DE102009044638; DE202010008435; R. Mix, J. F. Friedrich and N. Inagaki, "Permanence of Functional Groups at Polyolefin Surfaces Introduced by Dielectric Barrier Discharge Pretreatment in Presence of Aerosols" in Atmospheric Pressure Plasma Treatment of Polymers: Relevance to Adhesion, Michael Thomas (Editor), K. L. Mittal (Editor), ISBN: 978-1-118-74751-3, June 2013)
   ∘ Zusatz von Gasen und Dämpfen zu Flammen (V. J. Eigenbrod, C. Hensch, A. Kemper. "Combustion chemical vapor deposition" Vakuum in Forschung und Praxis, 2015, 27, 30 - 34. doi: 10.1002/vipr.201500581)
a), b) und c) können das Problem der degradierenden Aktivierung reduzieren, aber nicht völlig beseitigen. Das Abscheiden von Schichten (d) kann zu stabilen Eigenschaften führen, bringt aber eine ganze Reihe anderer Probleme mit sich wie z.B. Haftung der Schicht auf dem Polymer, deutlich größerer Aufwand bei der Prozessführung. Beim Einsatz von Flammen zur Schichtabscheidung sind bisher nur oxidische Schichten, insbesondere mit Siloxan-Prekursoren beschrieben.

Die vorliegende Erfindung stellt sich daher die Aufgabe, mittels einer möglichst einfachen Prozessführung die zuvor genannten Probleme zu lösen und insbesondere eine verlässliche Aktivierung zu ermöglichen, so dass Reaktivstoffe zuverlässig an die Oberfläche von thermoplastischen Polymermaterialien angebunden werden können. Zudem stellt sich die vorliegende Erfindung die Aufgabe, eine Vorrichtung zur Durchführung des Verfahrens anzugeben, sowie Polymermaterialien, die gute Adhäsionseigenschaften (insbesondere für die weitere Verarbeitung z.B. für die Beschichtung mit Lacken, Metallen, Pigmenten oder für die Laminierung) aufweisen, bereitzustellen. Aufgabe der vorliegenden Erfindung ist es zudem, ein verlässliches Beschichtungsverfahren für Polymermaterialien anzugeben.

Diese Aufgabe wird hinsichtlich eines Verfahrens zur Modifikation von Oberflächen von Polymermaterialien mit den Merkmalen des Patentanspruchs 1 gelöst. Mit Patentanspruch 10 wird ein entsprechend modifiziertes Polymermaterial angegeben, während Patentanspruch 13 eine Vorrichtung zur Modifikation von Oberflächen von Polymermaterialien betrifft. Mit Patentanspruch 15 wird ein Verfahren zur Beschichtung von Oberflächen von Polymermaterialien angegeben, bei dem ein entsprechend der vorliegenden Erfindung modifiziertes Polymermaterial beschichtet wird. Die jeweiligen abhängigen Patentansprüche stellen vorteilhafte Weiterbildungen dar.

Die vorliegende Erfindung betrifft somit ein Verfahren zur Modifikation von Oberflächen von Polymermaterialien, bei dem die Oberfläche des Polymermaterials durch eine Kombination von Flammenbehandlung und mindestens einmalige Behandlung mit mindestens einer mindestens einen Reaktivstoff enthaltenden oder hieraus bestehenden Flüssigkeit verändert und/oder funktionalisiert wird, wobei durch die Flammenbehandlung eine Aktivierung des Polymermaterials und/oder des mindestens einen Reaktivstoffs erfolgt, so dass der mindestens eine Reaktivstoff mit der Oberfläche des Polymermaterials und/oder der mindestens eine Reaktivstoff untereinander reagiert.

Gemäß der vorliegenden Erfindung wurde gefunden, dass eine Kombination aus Flammenbehandlung und Behandlung mit einem Reaktivstoff (der als Flüssigkeit vorliegt oder in einer Flüssigkeit enthalten ist), eine permanente und zuverlässige Modifikation von Oberflächen von Polymermaterialien ermöglicht werden kann. Unter einer Kombination von Flammenbehandlung und Behandlung mit der im Reaktivstoff enthaltenen bzw. hieraus bestehenden Flüssigkeit wird dabei verstanden, dass die Reihenfolge der Behandlungsschritte, d. h. der Flammenbehandlung und der Behandlung mit der Flüssigkeit auf die jeweiligen Bedürfnisse abgestimmt erfolgen kann. So kann beispielsweise zunächst eine Flammenbehandlung durchgeführt werden (wobei die Oberfläche des Polymermaterials aktiviert wird, indem beispielsweise sauerstoffhaltige Funktionalgruppen durch die Flammenbehandlung erzeugt werden) und anschließend erfolgt eine Behandlung mit der Flüssigkeit. Der Reaktivstoff ist dabei in der Lage, mit den aktivierten Stellen im Polymer zu reagieren und beispielsweise eine kovalente Bindung einzugehen. Ebenso umfasst ist hierbei allerdings, dass zunächst eine Behandlung mit der im Reaktivstoff enthaltenen bzw. hieraus bestehenden Flüssigkeit erfolgt und im Anschluss daran eine Flammenbehandlung durchgeführt wird. Hierbei kommt es zu einer Aktivierung des Reaktivstoffs (sowie ggf. ebenso zur Aktivierung der Oberfläche des Polymermaterials gemäß den voranstehend beschriebenen Prinzipien), so dass eine Reaktion des aktivierten Reaktivstoffs mit der Oberfläche und/oder mit weiteren Reaktivstoffen erfolgen kann. Einer der zuvor genannten Schritte kann dabei mehrmals ausgeführt werden. Die Reihenfolge der jeweiligen Schritte kann in Abstimmung auf die Substratmaterialien und/oder der verwendeten Reaktivstoffe erfolgen.

In einer bevorzugten Ausführungsform erfolgt das Aufbringen der Flüssigkeit auf die Oberfläche des Polymermaterials in Form eines Aerosols. Hierzu wird die Flüssigkeit in einer geeigneten Vorrichtung zerstäubt und das Aerosol auf die Oberfläche aufgebracht.

Alternativ kann die Flüssigkeit beispielsweise auch durch Tropfenauftrag, durch Eintauchen des Polymermaterials in die Flüssigkeit, durch slot-diecoating (Auftrag mit einer Schlitzdüse), durch Rakeln oder Besprenkeln des Polymermaterials mit der Flüssigkeit erfolgen. Bevorzugt ist allerdings das Aufbringen der Flüssigkeit als Aerosol.

Die Flüssigkeit kann zudem bereichsweise oder vollflächig auf die Oberfläche des Polymermaterials aufgebracht werden.

Zudem ist es bevorzugt, wenn eine ein- oder mehrmalige Behandlung der Oberfläche mit der Flüssigkeit oder den mehreren Flüssigkeiten, insbesondere dem Aerosol nach und/oder vor der Flammenbehandlung der Oberfläche erfolgt.

Ebenso ist es möglich, das zusätzlich zum Reaktivstoff mindestens ein Agens, das bei Kontakt mit dem Reaktivstoff und/oder der Oberfläche des Polymermaterials reagiert, mit auf die Oberfläche des Polymermaterials aufgebracht wird. Das Agens kann dabei bereits in der Flüssigkeit enthalten sein, alternativ ist es ebenso möglich, das Agens in einer separaten Lösung bzw. als separate Flüssigkeit bereit zu stellen und das Agens separat auf die Oberfläche des Polymermaterials aufzubringen. Das Agens kann ggf. ebenso gasförmig mit der Oberfläche des Polymermaterials bzw. dem Reaktivstoff in Kontakt gebracht werden. Beispielhafte Agentien sind primäre oder sekundäre Amine, primäre oder sekundäre Diamine und/oder aromatische Amine. Insbesondere können hierbei Ethylendiamin (das z.B. als Dampf bzw. im gasförmigen Zustand aufgebracht werden kann) und/oder primäre armomatische Amine verwendet werden. Die zuvor genannten Agentien eignen sich insbesondere für den Fall, dass der Reaktivstoff elektrophile Funktonalitäten aufweist (z.B. Polyacrylsäure oder Polyacrylate) und somit bei Kontakt mit dem eine Reaktion zwischen Reaktivstoff und Agens stattfinden kann.

Beim Polymermaterial handelt es sich insbesondere um thermoplastische Kunststoffe, Elastomere oder Duromere, insbesondere durch thermoplastische Kunststoffe.

Der thermoplastische Kunststoff ist hierbei bevorzugt ausgewählt aus der Gruppe bestehend aus
a) Polyolefinen, insbesondere Polyethylen (PE), Polypropylen (PP) Polybutylen (PB, Polybuten-1), Polyisobutylen (PIB), Polymethylpenten (PMP), Polynorbornen (PN), Cycloolefin-Copolymere (COC), Copolymeren dieser Materialien untereinander und/oder mit anderen Monomeren sowie Blends, umfassend oder bestehend aus mindestens zwei der zuvor genannten Polyolefinen,
b) Polyestern, insbesondere Polyethylenterephthalat (PET), Polybutylenterephthalat (PBT), Polylactide, Polyhydroxyalkanoate sowie Blends, umfassend oder bestehend aus mindestens zwei der zuvor genannten Polyestern,
c) sich von den Polyolefinen a) unterscheidenden radikalischen Polymerisaten, insbesondere Polystyrol (PS), Poly(meth)acrylate (PMA bzw. PMMA), Copolymere dieser Materialien untereinander und/oder mit anderen Monomeren sowie Blends, umfassend oder bestehend aus mindestens zwei der zuvor genannten radikalische Polymerisaten, sowie
d) Blends oder Mischungen aus mindestens zwei der zuvor genannten thermoplastischen Kunststoffen.

Weiter ist es von Vorteil, wenn die mindestens eine Flüssigkeit den mindestens einen Reaktivstoff gelöst in mindestens einem nicht-brennbaren Lösungsmittel, insbesondere Wasser, halogenierte Kohlenwasserstoffe oder Kohlendioxid, beinhaltet. Die Flüssigkeit kann ebenso als Emulsion eingesetzt werden. Bevorzugt ist hierbei, dass der Reaktivstoff im nicht-brennbaren Lösungsmittel emulgiert vorliegt.

Alternativ ist es ebenso möglich, dass der Reaktivstoff lösungsmittelfrei vorliegt und eingesetzt werden kann. Dies ist insbesondere dann der Fall, wenn der Reaktivstoff bei den beim Verfahren vorherrschenden Bedingungen selbst als Flüssigkeit vorliegt. Insbesondere kommen in diesem Fall Oligoethylenglykole und/oder Oligoethylenimine, wie beispielsweise Ethylendiamin, Diethylentriamin, Triethylentetramin, Tetraethylenpentamin und weitere Homologe sowie Spermin etc. zum Einsatz.

Für den Fall, dass der Reaktivstoff in Lösung vorliegt, beträgt dessen Konzentration im nicht brennbaren Lösungsmittel vorzugsweise von 0,01 bis 10 Gew.-%, bevorzugt 0,1 bis 5 Gew.-%, besonders bevorzugt 0,2 bis 1,0 Gew.-%.

Der Reaktivstoff ist hierbei insbesondere ausgewählt aus der Gruppe bestehend aus funktionellen Polymeren oder Oligomeren, die mindestens eine Art funktioneller Gruppen aufweisen, bevorzugt hydrophile funktionelle Gruppen, besonders bevorzugt funktionelle Gruppen ausgewählt aus der Gruppe bestehend aus Amino-, Hydroxy-, Carbonyl-, Carboxyl-, Cyanat-, Isocyanat-, Imino-, Hydroxyimino, Epoxid-, oder Aziridingruppen sowie Kombinationen mindestens zwei der zuvor genannten Arten von funktionellen Gruppen.

Unter einem Oligomeren wird im Sinne der vorliegenden Erfindung dabei ein Stoff verstanden, der aus wiederkehrenden Einheiten aufgebaut ist, wobei das zahlengemittelte Molekulargewicht Mₙ < 1000 g/mol beträgt. Bei einem Polymeren handelt es sich um einen Stoff, der aus wiederkehrenden Einheiten aufgebaut ist und ein zahlengemitteltes Molekulargewicht Mₙ ≥ 1000 g/mol aufweist. Die zahlengemittelten Molekulargewichte können dabei mittels Standardmessverfahren, wie z. B. GPC bestimmt werden.

In einer besonders bevorzugten Ausführungsform ist der mindestens eine Reaktivstoff ausgewählt aus der Gruppe bestehend aus Polymeren und/oder oder Oligomeren von Ethylenimim, insbesondere Polyethylenimin (PEI); Polymeren und/oder oder Oligomeren der Acrylsäure, insbesondere Polyacrylsäure (PAA), sowie Mischungen und Kombinationen mindestens zweier der zuvor genannten Stoffe.

Die Behandlung mit der Flüssigkeit wird dabei insbesondere so ausgeführt, dass ein Film der Flüssigkeit auf der Oberfläche erzeugt wird, der eine Trockenschichtdicke von 0,1 bis 100 nm, bevorzugt von 0,5 bis 10 nm erzeugt.

Das Polymermaterial wird insbesondere in Form einer Folie eingesetzt. Alternativ sind jedoch sämtliche zugänglichen Formteile ebenso für die Zwecke des erfindungsgemäßen Verfahrens einsetzbar.

Besonders bevorzugt wird das erfindungsgemäße Verfahren kontinuierlich durchgeführt, insbesondere indem das Polymermaterial kontinuierlich durch mindestens eine Beflammungszone, in der die Aktivierung mittels Flammenbehandlung durchgeführt wird, und mindestens eine Aerosolzone, in der die mindestens einmalige Beaufschlagung der Oberfläche mit dem Aerosol durchgeführt wird, geführt. Diese Variante eignet sich insbesondere dann, wenn das Polymermaterial als Folie eingesetzt wird.

Bei einer kontinuierlichen Verfahrensführung wird das Polymermaterial, insbesondere in Form einer Folie, bevorzugt mit einer Geschwindigkeit von 0,05 bis 60 m/s, bevorzugt 0,25 bis 30 m/s, besonders bevorzugt 1,0 bis 10 m/s geführt wird.

Die Flammenbehandlung kann, wie im Stand der Technik für Polymermaterialien allgemein beschrieben, durchgeführt werden. Die durch die Flamme in das Substrat, d.h. in das Polymermaterial eingetragene Energie liegt hierbei bevorzugt im Bereich zwischen 0,25 kJ/ m² und 30 kJ/ m², besonders bevorzugt 1 kJ/ m² und 20 kJ/ m², wodurch eine zuverlässige Aktivierung der Oberfläche des Polymermaterials und/oder des Reaktivstoffes (und/oder des ggf. vorhandenen reaktiven Agens) erfolgen kann, ohne dass Schädigungen im Polymermaterial auftreten.

Nach der Modifikation der Oberfläche kann das Polymermaterial gewaschen werden, insbesondere mit Wasser oder einer wässrigen Lösung; dieser Waschvorgang ist allerdings nicht zwingend notwendig.

Die vorliegende Erfindung betrifft ebenso ein modifiziertes Polymermaterial, insbesondere Folie oder eines Formteils, mit einer modifizierten Oberfläche, wobei an der Oberfläche eine Schicht mindestens eines Reaktivstoffs ausgebildet ist, wobei der mindestens eine Reaktivstoff an der Oberfläche gebunden ist und/oder als Schicht vernetzter Reaktivstoffmoleküle ausgebildet ist.

Das modifizierte/ funktionalisierte Polymermaterial der vorliegenden Erfindung ist insbesondere mit dem eingangs beschriebenen Verfahren herstellbar. Je nach eingesetztem Reaktivstoff kann dieser beispielsweise kovalent an die Oberfläche des Polymermaterials angebunden sein. Dies kann beispielsweise dann der Fall sein, wenn bei der Flammenbehandlung die Oberfläche des Polymermaterials aktiviert wird (beispielsweise indem durch die in der Flamme enthaltenen Radikalspezies die Polymeroberfläche oxidiert wird) und die reaktiven Stellen mit dem Reaktivstoff reagieren können.

Alternativ oder zusätzlich hierzu ist es ebenso möglich, dass die Reaktivstoffmoleküle bei der Flammenbehandlung untereinander reagieren und beispielsweise eine Vernetzung der Reaktivstoffmoleküle stattfindet. Das erzeugte polymere Netzwerk kann in diesem Fall auch durch nicht kovalente Wechselwirkung (Van-der-Waals-Wechselwirkung) mit der polymeren Oberfläche wechselwirken und somit an diese gebunden sein. Ebenso ist hier selbstverständlich eine Kombination der genannten Bindungsprinzipien zwischen den Reaktivstoffmolekülen und der Oberfläche des Polymermaterials denkbar.

Der Reaktivstoff bildet somit eine dünne Schicht an der Oberfläche des Polymermaterials aus; die Trockenschichtdicke des gebundenen Reaktivstoffs beträgt hierbei insbesondere 0,05 bis 100 nm, bevorzugt von 0,1 bis 50 nm, besonders bevorzugt von 0,5 bis 10 nm.

Zudem betrifft die vorliegende Erfindung eine Vorrichtung zur Modifikation von Oberflächen von Polymermaterialien, umfassend
mindestens eine Beflammungszone, in der eine Aktivierung einer Oberfläche eines Polymermaterials mittels Flammenbehandlung und/oder eine Initiierung des mindestens einen Reaktivstoffs durchgeführt werden kann, und
mindestens eine Behandlungszone, in der eine mindestens einmalige Beaufschlagung der Oberfläche des Polymermaterials mit einer Flüssigkeit, insbesondere einem Aerosol durchgeführt werden kann.

In einer bevorzugten Ausführungsform umfasst die Vorrichtung in der Beflammungszone mindestens einen Beflammungskopf. Für den Fall, dass die Vorrichtung über mehrere Beflammungszonen verfügt, verfügt selbstverständlich jede einzelne der Beflammungszonen über mindestens einen Beflammungskopf.

Die Behandlungszone weist in einer bevorzugten Ausführungsform mindestens einen Aerosol-Generator auf. Für den Fall, dass die Vorrichtung über mehrere Behandlungszonen verfügt, weist selbstverständlich jede dieser Behandlungszonen mindestens einen Aerosol-Generator auf.

Für den Fall, dass die Flüssigkeit in der Behandlungszone auf andere Art und Weise als durch Aerosolbildung auf die Oberfläche des Polymermaterials aufgebracht wird, erfolgt dies über geeignete andere Vorrichtungen, wie beispielsweise eine Schlitzdüse, Sprenkler, ein Tauchbad etc.

Bevorzugt ist jedoch die Aufbringung der Flüssigkeit als Aerosol, so dass die Vorrichtung bevorzugt über mindestens einen Aerosol-Generator verfügt.

Die Behandlungszone kann einseitig oder beidseitig (in diesem Fall verfügt die Vorrichtung um mindestens zwei Behandlungszonen) der Beflammungszone ausgebildet sein.

Insbesondere für den Fall, dass eine kontinuierliche Modifikation der Polymermaterialien angedacht ist, verfügt die Vorrichtung gemäß der vorliegenden Erfindung über mindestens ein Transportsystem zum Transport des Polymermaterials durch die Beflammungszone und die mindestens eine Behandlungszone.

Bei dieser Ausführungsform ist es bevorzugt, dass das Transportsystem einen Substrathalter zur Halterung des Polymermaterials sowie ein Linear-Transportsystem zum Bewegung des Substrathalters durch die Beflammungszone und die mindestens eine Behandlungszone.

Des Weiteren ist es vorteilhaft, wenn das Transportsystem eine Rolle zum kontinuierlichen Lenken eines als Folie ausgebildeten Polymermaterials durch die Beflammungszone und die mindestens eine Behandlungszone umfasst.

Die vorliegende Erfindung betrifft zudem ein Verfahren zur Beschichtung von Oberflächen von Polymermaterialien. Hierbei wird zunächst ein eingangs beschriebenes Verfahren zur Modifikation von Oberflächen von Polymermaterialien durchgeführt, oder es wird ein erfindungsgemäßes modifiziertes Polymermaterial eingesetzt. Das erhaltene bzw. eingesetzte modifizierte Polymermaterial wird dabei mit mindestens einem Beschichtungsstoff beschichtet.

Bevorzugt ist hierbei der Beschichtungsstoff ausgewählt aus der Gruppe bestehen aus Lacken, Klebstoffen, Tinten, Laminierfolien, Metallen sowie Kombinationen hiervon.

Die vorliegende Erfindung wird anhand der nachfolgenden Ausführungen näher erläutert, ohne die Erfindung auf die spezifischen Details zu beschränken.

Hierbei zeigen
- Figur 1:: eine erfindungsgemäße Vorrichtung zur Modifikation von Oberflächen von Polymermaterialien
- Figur 2:: eine zweite Vorrichtung zur Modifikation von Oberflächen von Polymermaterialien
- Figur 3:: den Wasserkontaktwinkel von beflammten Polyethylen-Folien gemäß Beispiel 1
- Figur 4:: C1s-Spektren von mit PAA-Aerosol beaufschlagtem und beflammtem Polyethylen gemäß Beispiel 4.

Die vorliegende Erfindung betrifft ein Verfahren zur Modifikation der Oberfläche von Polymermaterialien, bei dem diese mittels Flammenbehandlung aktiviert und mit einer Lösung eines Reaktivstoffs beaufschlagt werden. Die Flammenbehandlung ist auch nach Aufbringen der Lösung des Reaktivstoffs möglich. Das Aufbringen der Lösung des Reaktivstoffs erfolgt insbesondere als Aerosol. Es wurde gefunden, dass mit Flammenbehandlung nicht nur oxidisch funktionalisierte Polymeroberflächen erzeugt werden können. Mit dem Einsatz von Aerosolen gelingt es, auch organische Funktionalgruppen an Oberflächen kovalent zu binden. Dazu ist nur ein technisch relativ einfacher Aufbau und simpler Prozess nötig.

Durch die Kombination mit der Flammbehandlung werden nicht brennbare Aerosole bevorzugt und können die Anforderungen gut erfüllen. Wasser kann als Hauptkomponente der Aerosole eingesetzt werden. Um spezifische organische Funktionalgruppen (z.B. Amino-, Hydroxyl-, Carboxylgruppen) an die Oberfläche zu bringen, sind Substanzen bevorzugt, die diese Gruppen enthalten oder solche Gruppen enthalten, die leicht in die gewünschten Funktionalgruppen überführt werden können. Der Einsatz von Funktionspolymeren kann die Prozessgestaltung demgegenüber deutlich vereinfachen. Diese Polymere müssen einerseits die gewünschten Funktionalgruppen enthalten oder solche enthalten, die in die gewünschte Funktionalgruppe überführt werden können. Andererseits müssen sie ausreichend und in Lösungen mit nicht zu großer Viskosität löslich sein, um aus der Lösung ein Aerosol herstellen zu können. Für die eigentliche Anbindung der Funktionspolymere an die Oberfläche und die eigentliche Herstellung der funktionalisierten Oberflächen ist eine ganze Reihe von Varianten möglich:
1) Aktivierung mit Flamme und anschließende Beaufschlagung mit Aerosol. Hierzu werden Polymere eingesetzt, die mit der aktivierten Oberfläche reagieren können.
2) Aktivierung mit Flamme und mehrfache anschließende Beaufschlagung mit Aerosol. Polymere, die nicht direkt mit der aktivierten Oberfläche reagieren, können in dieser Variante zur Reaktion gebracht werden, indem im zweiten Schritt eine Substanz zugeführt wird, die die Kopplung an die Oberfläche herstellt. Es können auf diese Weise aber auch Funktionalgruppen eines nach 1) gekoppelten Polymers in andere Funktionalgruppen überführt werden.
3) Beaufschlagung der Oberfläche mit Aerosol und anschließende Anbindung durch Reaktivkomponenten aus der Flamme. In dieser Variante können auch nicht mit der aktivierten Oberfläche reagierende Polymere kovalent an die Oberfläche gebunden werden.

In allen Varianten dient das Aerosol der Polymerlösung dazu, das Polymer in dünner Schicht auf die Oberfläche aufzutragen. Die mit der Oberfläche in unmittelbaren Kontakt kommenden Moleküle gehen dann die Reaktion ein. Diese Moleküle können als molekularer Primer aufgefasst werden. Die damit an der Oberfläche des Materials angebrachten Funktionalgruppen können bei späterer Anwendung wiederum Reaktionen eingehen. Als Reaktionspartner sind unter anderem Reaktivharze in Form von Lacken, Klebstoffen und ähnlichem möglich. Mit geeignet funktionalisierten Oberflächen sind Reaktionen ohne weitere Zusätze oder Schichten möglich. Derartige Reaktionen führen zu kovalenten chemischen Bindungen über die Grenzflächen hinweg, die zu ausgesprochen guter Adhäsion führen.

Diese Anwendungsszenarien erfordern, dass nicht zu viele nicht an die Oberfläche gebundene Moleküle vorhanden sind. Folglich werden sehr dünne Schichten gebraucht, die mittels Aerosol aufgetragen werden.

Bevorzugte Lösungsmittel:
- Wasser, da nicht brennbar
- andere nicht oder schwer brennbare Lösungsmittel z.B. halogenierte Kohlenwasserstoffe aber auch Kohlendioxid
- Lösungsmittelfrei bei Verwendung von Oligomeren (Polymere mit kleiner Molmasse)

### Bevorzugte Konzentrationen:

Bei den Varianten 1 und 2 ist es das Ziel das Polymer in höchstens monomolekularer Schicht aufzutragen, sodass alle Moleküle an der Oberfläche gebunden werden. Die über die Fläche gemittelte Dicke liegt zwischen 0,1 nm und 10 nm.

Bei Variante 2 kann die Schicht dicker sein, wenn die beiden bzw. alle Komponenten vernetzen und an der Oberfläche gebunden werden. In allen Fällen müssen die Parameter der Beschichtung (Nassauftragsdicke, Konzentration der Lösung) so eingestellt werden, damit die gewünschten Schichtdicken erreicht werden. Die über die Fläche gemittelte Dicke kann hier größer sein, sollte aber einige 10 nm nicht übersteigen (< 100 nm).

Ungebundene Moleküle sind in gewissem Maße tolerierbar (weil makroskopisch in extrem kleiner Konzentration vorhanden).

Die Nassschichtdicke muss so gewählt werden, dass das Lösungsmittel - falls vorhanden - im zur Verfügung stehenden Zeitraum (vom Beschichten bis z.B. zum Aufwickeln der Folie) verdampfen kann. Das sind typisch weniger als einige Mikrometer (< 10 µm).

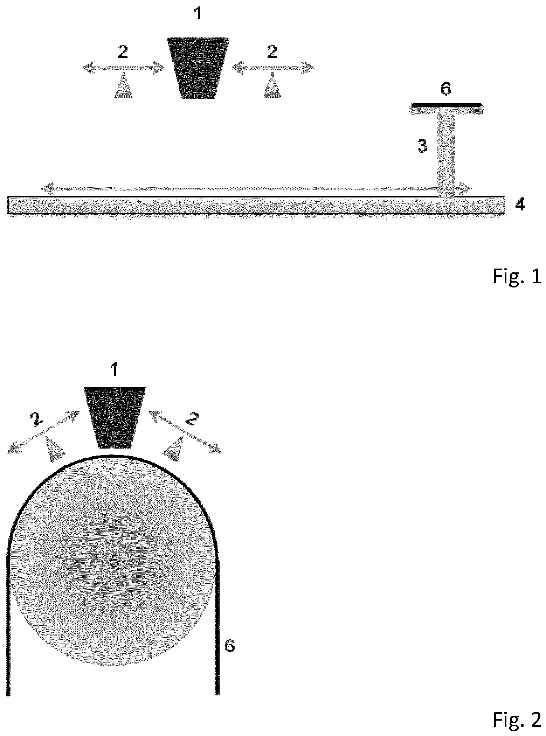

Figur 1 zeigt eine erste erfindungsgemäße Ausführungsform einer Vorrichtung zur Modifikation von Oberflächen vom Polymermaterialien. Die Vorrichtung eignet sich insbesondere zur Modifikation der Oberflächenform dreidimensional begrenzter Formteile, wie beispielsweise Formkörpern. In Figur 1 ist eine Ausführungsform dargestellt, die sich insbesondere zur Behandlung von Folienstücken eignet. Die Vorrichtung verfügt über einen Beflammungskopf 1 sowie zwei Aerosol-Generatoren 2, die links und rechts des Beflammungskopfes 1 angeordnet sind. Alternativ kann die Vorrichtung auch mit nur einem Aerosol-Generator ausgestattet sein, der in Vorschubrichtung des Poylmermaterials vor oder nach dem Beflammungskopf 1 angeordnet sein kann. Die Vorrichtung verfügt ferner über einen Substrathalter 3, mit dem das Substrat 6 (im vorliegenden Fall ein Folienstück, allerdings eignen sich ebenso weitere Formkörper) durch die Behandlungszone (die Zone, in der die Aerosol-Generatoren 2 angeordnet sind) und die Beflammungszone (die Zone, in der der Beflammungskopf angeordnet ist) durchgeführt werden können. Über ein Linear-Transportsystem 4 kann der Substrathalter 3 durch die jeweiligen Zonen bewegt werden, wie dies mit dem Pfeil angedeutet ist. Der prinzipielle, in Figur 1 dargestellte Aufbau der Vorrichtung ermöglicht es, eine Behandlung des zu modifizierenden Substrates 6 mit einem Aerosol vor bzw. nach der Beflammung durchzuführen, indem eine Flüssigkeit, die den Reaktivstoff enthält oder hieraus besteht, entweder vor oder nach dem Transport des Substrates durch die Beflammungszone erfolgt. Denkbar ist ebenso eine doppelte Behandlung des Substrates 6 mit der Flüssigkeit, indem das Substrat beim Durchführen durch die Behandlungs- und Beflammungszone mit beiden Aerosolköpfen 2 mit der Flüssigkeit in Form eines Aerosols beaufschlagt wird.

Figur 2 zeigt eine weitere Ausführungsform einer erfindungsgemäßen Vorrichtung, die sich insbesondere für Endlossubstrate, insbesondere für Folien eignet. Diese Ausführungsform der erfindungsgemäßen Vorrichtung ermöglicht eine kontinuierliche Durchführung des Verfahrens. In Analogie zur Figur 1 verfügt die Vorrichtung gemäß Figur 2 einen Beflammungskopf 1 sowie jeweils seitlich dazu angeordnet einen Aerosol-Generator 2. Über eine Rolle 5, die beispielsweise als gekühlte Rolle ausgebildet sein kann, kann die Folie kontinuierlich durch die Beflammungs- und Behandlungszonen durchgeführt werden. Auch diese Vorrichtung ermöglicht eine einfache Behandlung der Folie (indem beispielsweise die Folie vor oder nach der Beflammung mit einem Aerosol des Reaktivstoffs beaufschlagt wird), ebenso ist auch eine doppelte Behandlung der Folie möglich.

Die vorliegende Erfindung wird anhand der nachfolgenden Beispiele näher erläutert.

### Beispiel 1 (Vergleich)

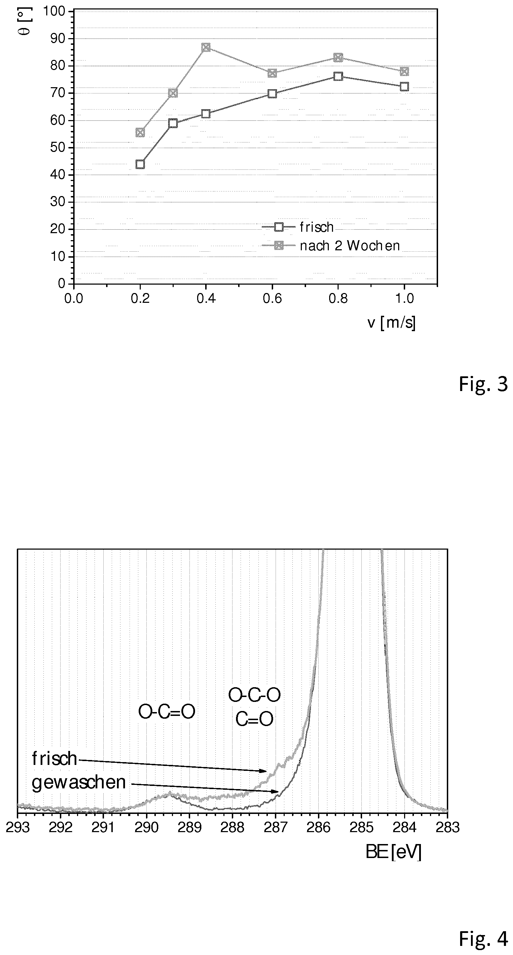

Eine Vorrichtung gemäß Figur 1 wurde verwendet, um Polyethylenfolie zu aktivieren. Der Brenner wurde mit einem Butan-Luft-Gemisch (1:10) betrieben. Einige Folien wurden mit jeweils unterschiedlicher Geschwindigkeit an der Flamme vorbeigeführt. Der Grad der Aktivierung der Folien wurde durch die Messung der Kontaktwinkel von Wassertopfen auf den Folienoberflächen bestimmt. Diese Messungen wurden zunächst kurz nach der Behandlung und dann 2 Wochen später durchgeführt. Die dabei erhaltenen Werte sind in Figur 3 gezeigt.

Dargestellt sind die Werte der Wasserkontaktwinkel der beflammten PE-Folie in Abhängigkeit von der Geschwindigkeit, mit der die Folien an der Flamme vorbeigeführt wurden. Die Werte wurden kurze Zeit nach der Behandlung (untere Kurve) bzw. zwei Wochen später (obere Messkurve) gemessen.

Der Rückgang der Aktivierung mit der Zeit ist anhand der größeren Kontaktwinkel deutlich zu erkennen.

### Beispiel 2:

Eine Vorrichtung gemäß Figur 1 wurde verwendet, um Polyethylenfolie zu beflammen und mit einem Aerosol einer 1%igen wässrigen Lösung von Polyethylenimin (PEI) zu beaufschlagen. Das Aerosol wurde nach der Beflammung aufgebracht.

Der Brenner wurde mit einem Butan-Luft-Gemisch (1:10) betrieben. Einige Folien wurden mit jeweils unterschiedlicher Geschwindigkeit (v) an der Flamme und einem Ultraschall-Aerosolgenerator vorbeigeführt. Aus dem Verbrauch von Lösung im Aerosolgenerator, der Konzentration der Lösung und der Geschwindigkeit der Folie wurde die nominelle Dicke der Polymerschicht (d(p)) berechnet, wobei Verluste vernachlässigt werden. Die Folien wurden dann mit Röntgenphotoelektronenspektroskopie (XPS, x-ray photoelectron spectroscopy) analysiert, um die Konzentration der Elemente an der Oberfläche der Folie zu bestimmen. Da das ursprüngliche Polyethylen kein Stickstoff enthält, ist das PEI als Ursprung für dieses Element anzusehen. Die Konzentration des Stickstoffes ist also ein Maß für die Dicke der PEI-Schicht. In der Tabelle 1 sind die Stickstoffkonzentrationen von unter unterschiedlichen Bedingungen hergestellten Proben zusammengestellt. Die Proben wurden zunächst kurze Zeit nach der Behandlung analysiert. Dann wurden die Proben mit Wasser gewaschen, um alles nicht chemisch gebundene PEI zu entfernen. Auch diese Proben wurden analysiert.

**Tabelle 1:**

| v m/s | d(p) nm | [N], at% frisch | gewaschen |
|---|---|---|---|
| 0.20 | 17 | 3.1 | 2.4 |
| 0.20 | 34 | 4.0 | 5.6 |
| 0.20 | 41 | 3.5 | 4.5 |
| 0.40 | 10 | 0.5 | 1.8 |
| 0.60 | 7 | 0.9 | 1.3 |

Es wurde gefunden, dass die Stickstoffkonzentration durch das Waschen nur in geringem Maße abnimmt. Die nach dem Waschen größeren Konzentrationen dieses Elements sind wohl darauf zurückzuführen, dass andere Komponenten der Oberfläche durch das Waschen entfernt wurden (z.B. durch die Aktivierung erzeugte niedermolekulare Fragmente). Die Daten belegen, dass das PEI kovalent an der Oberfläche gebunden ist.

### Beispiel 3:

Eine Vorrichtung gemäß Figur 1 wurde verwendet, um Polyethylenfolie zu beflammen und mit einem Aerosol einer 0.5%igen wässrigen Lösung von Polyacrylsäure (PAA, poly(acrylic acid)) zu beaufschlagen. Das Aerosol wurde vor der Beflammung aufgebracht.

Der Brenner wurde mit einem Butan-Luft-Gemisch (1:10) betrieben. Eine Folie wurde einer Geschwindigkeit von v = 0,4 m/ s an einem Ultraschall-Aerosolgenerator unter der Flamme vorbeigeführt. Aus dem Verbrauch von Lösung im Aerosolgenerator, der Konzentration der Lösung und der Geschwindigkeit der Folie wurde die nominelle Dicke der Polymerschicht d(p) = 12 nm berechnet, wobei Verluste vernachlässigt werden.

Die Folien wurden dann mit Röntgenphotoelektronenspektroskopie (XPS, x-ray photoelectron spectroscopy) analysiert. Im Bereich der Kohlenstoff-Cls-Spektren wurde bei einer Bindungsenergie von BE = 289,4 eV ein Signal gefunden, das charakteristisch für die Carboxylgruppen der PAA ist. Dieses Signal wird auch durch waschen nicht entfernt.

Figur 4 zeigt die C1s-Spektren von mit PAA-Aerosol beaufschlagten und beflammten PE vor und nach dem Waschen.

Wird das Aerosol nach der Beflammung mit dem Polymer in Kontakt gebracht wird zwar bei der frischen Probe das Carboxyl-Signal gefunden, nach dem Waschen jedoch ist dieses Signal verschwunden.

### Beispiel 4:

Eine Vorrichtung gemäß Figur 2 wurde verwendet, um im Rolle-zu-Rolle-Verfahren Polyethylenfolie zu beflammen und mit einem Aerosol einer 1%igen wässrigen Lösung von Polyethylenimin (PEI) zu beaufschlagen. Das Aerosol wurde nach der Beflammung durch einen Sprühvernebler aufgebracht.

Die Folien wurden mit unterschiedlichen Geschwindigkeiten behandelt, wobei die Produktionsrate des Aerosols konstant blieb. Bei größerer Bahngeschwindigkeit wurde also weniger Polymer aufgetragen. Mit XPS wurde die Stickstoffkonzentration an den Folienoberflächen bestimmt. Tabelle 2 zeigt die Stickstoffkonzentrationen kurz nach der Behandlung, nach 4 Wochen Lagerung und nach Waschen mit Wasser.

**Tabelle 2:**

| v | [N], at% | | |
|---|---|---|---|
| m/ min | frisch | nach 4 Wochen | gewaschen |
| 15.4 | 13.8 | 13.1 | 12.0 |
| 30.9 | 10.5 | 7.0 | 6.4 |
| 48.7 | 7.3 | 4.2 | 4.6 |

Die Wasserkontaktwinkel der frisch behandelten Probe (15,4 m/ min) wurde zu 22,8° bestimmt. Nach 4 Wochen wurden 35,6° gemessen.

Die Daten zeigen, dass das PEI an der Oberfläche gebunden ist und so eine lange Zeit hydrophile Oberfläche erzeugt.

### Beispiel 5:

Eine Vorrichtung gemäß Figur 2 wurde verwendet, um im Rolle-zu-Rolle-Verfahren Polyethylenterephthalatfolie (PET) zu beflammen und mit einem Aerosol einer 0,5%igen wässrigen Lösung von Polyethylenimin (PEI) zu beaufschlagen. Das Aerosol wurde nach der Beflammung durch einen Sprühvernebler aufgebracht.

Die Folien wurden mit unterschiedlichen Geschwindigkeiten behandelt, wobei die Produktionsrate des Aerosols der Geschwindigkeit angepasst wurde, um ähnlich Schichtdicken auf den Folien zu erzeugen.

Mit XPS wurde die Stickstoffkonzentration an den Folienoberflächen bestimmt. Tabelle 3 zeigt die Stickstoffkonzentrationen kurz nach der Behandlung und nach dem Waschen mit Wasser.

**Tabelle 3:**

| | [N], at% | |
|---|---|---|
| v, m/min | frisch | gewaschen |
| 20.3 | 3.9 | 4.0 |
| 37.6 | 3.0 | 4.9 |
| 50.8 | 4.0 | 4.2 |

Aus den Kontaktwinkeln von Wasser und Formamid wurde die freie Oberflächenenergie (SFE) berechnet (siehe Tabelle 4):

**Tabelle 4:**

| | SFE, mJ/ m2 | | |
|---|---|---|---|
| v, m/min | γ(pol) | γ(d) | γ(tot) |
| 20.3 | 17.7 | 30.9 | 48.6 |
| 37.6 | 15.1 | 34.0 | 49.1 |
| 50.8 | 12.3 | 35.7 | 48.1 |

Die Daten zeigen, dass das PEI an der Oberfläche der PET-Folie gebunden ist und so eine lange Zeit hydrophile Oberfläche erzeugt.

Mit dem beschriebenen Lösungsweg werden funktionale Polymere in einem effizienten Prozess als molekulare Primer genutzt, die es gestatten mit einem geeignetem Partner (Lack, Klebstoff, Tinte, Laminierfolie, Metall etc.) chemische Bindungen einzugehen, die zu sehr guter Haftung führen.

Die mit chemisch gebundenen funktionalen Polymeren ausgestatteten Oberflächen von Polymermaterialien zeichnen sich gegenüber Materialien mit einfacher Aktivierung durch eine deutlich größere Langzeitstabilität der Eigenschaften aus.

Durch die chemische Anbindung von Funktionalpolymeren an die Oberfläche von Polymermaterialien werden durch eine relative einfache Erweiterung der Vorrichtung und des Prozesses Funktionalgruppen und damit chemische Eigenschaften zugänglich, die mit der einfachen Aktivierung nicht zugänglich sind.

Die Erfindung kann überall dort eingesetzt werden, wo eine einfache Aktivierung der Oberfläche von Polymermaterialien nicht zu zufriedenstellenden Eigenschaften führt. Das kann sein:
- unzureichende Langzeitstabilität der Aktivierung
- unzureichende Haftung bei Verklebungen, Laminierungen etc.
- unzureichende Haftung von Metallen

Mögliche Anwendungsbereiche sind
- Folien mit langzeitstabiler Aktivierung
- klebstofffrei laminierte Folien, verbundene Formteile
- Folien und Formteile mit spezifischer und definierter Funktionalisierung
- für hohe Haftfestigkeit in Verbunden mit Reaktivharzen, Lacken etc.
- für hohe Haftfestigkeit von Metallen
- für spezielle Anwendungen wie z.B. für Substrate zur Immobilisierung von biologisch aktiven Molekülen.

## Patentansprüche

1. Verfahren zur Modifikation von Oberflächen von Polymermaterialien, bei dem die Oberfläche des Polymermaterials durch eine Kombination von Flammenbehandlung und mindestens einmalige Behandlung mit mindestens einer mindestens einen Reaktivstoff enthaltenden oder hieraus bestehenden Flüssigkeit verändert und/oder funktionalisiert wird, wobei durch die Flammenbehandlung eine Aktivierung des Polymermaterials und/oder des mindestens einen Reaktivstoffs erfolgt, so dass der mindestens eine Reaktivstoff mit der Oberfläche des Polymermaterials und/oder der mindestens eine Reaktivstoff untereinander reagiert.

2. Verfahren nach Anspruch 1, **dadurch gekennzeichnet, dass** die Behandlung durch Aufbringen der Flüssigkeit auf die Oberfläche erfolgt, insbesondere durch Aufbringen der Flüssigkeit als Aerosol.

3. Verfahren nach einem der vorhergehenden Ansprüche, **dadurch gekennzeichnet, dass**
eine ein- oder mehrmalige Behandlung der Oberfläche mit der Flüssigkeit oder den mehreren Flüssigkeiten, insbesondere dem Aerosol nach und/oder vor der Flammenbehandlung der Oberfläche erfolgt.
und/oder zusätzlich zur Behandlung der Oberfläche mit dem mindestens einen Reaktivstoff die Oberfläche mit mindestens einem reaktiven Agens behandelt wird, das bei Kontakt mit dem mindestens einen Reaktivstoff und/oder der Oberfläche reagiert.

4. Verfahren nach einem der vorhergehenden Ansprüche, **dadurch gekennzeichnet, dass** das Polymermaterial ausgewählt ist aus der Gruppe bestehend aus thermoplastischen Kunststoffen, Elastomeren, Duromeren, wobei der thermoplastische bevorzugt Kunststoff ausgewählt ist aus der Gruppe bestehend aus
a) Polyolefinen, insbesondere Polyethylen (PE), Polypropylen (PP) Polybutylen (PB, Polybuten-1), Polyisobutylen (PIB), Polymethylpenten (PMP), Polynorbornene (PN), Cycloolefin-Copolymere (COC), Copolymeren dieser Materialien untereinander und/oder mit anderen Monomeren sowie Blends, umfassend oder bestehend aus mindestens zwei der zuvor genannten Polyolefinen,
b) Polyestern, insbesondere Polyethylenterephthalat (PET), Polybutylenterephthalat (PBT), Polylactide, Polyalkylalkanoate sowie Blends, umfassend oder bestehend aus mindestens zwei der zuvor genannten Polyestern,
c) sich von den Polyolefinen a) unterscheidenden radikalischen Polymerisaten, insbesondere Polystyrol (PS), Poly(meth)acrylate (PMA bzw. PMMA), Copolymere dieser Materialien untereinander und/oder mit anderen Monomeren sowie Blends, umfassend oder bestehend aus mindestens zwei der zuvor genannten radikalische Polymerisaten,
d) Blends oder Mischungen aus mindestens zwei der zuvor genannten thermoplastischen Kunststoffen.

5. Verfahren nach einem der vorhergehenden Ansprüche, **dadurch gekennzeichnet, dass** die mindestens eine Flüssigkeit den mindestens einen Reaktivstoff gelöst oder als Emulsion in mindestens einem nicht-brennbaren Lösungsmittel, insbesondere Wasser, halogenierte Kohlenwasserstoffe oder Kohlendioxid, beinhaltet oder der Reaktivstoff lösungsmittelfrei vorliegt, wobei bevorzugt die Konzentration des mindestens einen Reaktivstoffs im nicht-brennbaren Lösungsmittel von 0,01 bis 10 Gew.-%, bevorzugt 0,1 bis 5 Gew.-%, besonders bevorzugt 0,2 bis 1,0 Gew.-% beträgt.

6. Verfahren nach einem der vorhergehenden Ansprüche, **dadurch gekennzeichnet, dass** der mindestens eine Reaktivstoff ausgewählt ist aus der Gruppe bestehend aus funktionellen Polymeren oder Oligomeren, die mindestens eine Art funktioneller Gruppen aufweisen, bevorzugt hydrophile funktionelle Gruppen, besonders bevorzugt funktionelle Gruppen ausgewählt aus der Gruppe bestehend aus Amino-, Hydroxy-, Carbonyl-, Carboxyl-, Cyanat-, Isocyanat-, Imino-, Hydroxyimino, Epoxid-, oder Aziridingruppen sowie Kombinationen mindestens zwei der zuvor genannten Arten von funktionellen Gruppen, bevorzugt der mindestens eine Reaktivstoff ausgewählt ist aus der Gruppe bestehend aus Polymeren und/oder oder Oligomeren von Ehtylenimim, insbesondere Polyethylenimin (PEI); Polymeren und/oder oder Oligomeren der Acrylsäure, insbesondere Polyacrylsäure (PAA), sowie Mischungen und Kombinationen mindestens zweier der zuvor genannten Stoffe.

7. Verfahren nach einem der vorhergehenden Ansprüche, **dadurch gekennzeichnet, dass**
bei der mindestens einmaligen Behandlung der Oberfläche mit der Flüssigkeit, insbesondere dem Aerosol ein Film mit einer Trockenschichtdicke von 0,1 bis 100 nm, bevorzugt von 0,5 bis 10 nm erzeugt wird, und/oder
das Polymermaterial in Form einer Folie oder eines Formteils eingesetzt wird.

8. Verfahren nach einem der vorhergehenden Ansprüche, **dadurch gekennzeichnet, dass**
das Verfahren es kontinuierlich durchgeführt wird, insbesondere indem das Polymermaterial kontinuierlich durch mindestens eine Beflammungszone, in der die Aktivierung mittels Flammenbehandlung durchgeführt wird, und mindestens eine Aerosolzone, in der die mindestens einmalige Beaufschlagung der Oberfläche mit dem Aerosol durchgeführt wird, geführt wird, und/oder
das Polymermaterial mit einer Geschwindigkeit von 0,05 bis 60 m/s, bevorzugt 0,25 bis 30 m/s, besonders bevorzugt 1,0 bis 10 m/s geführt wird.

9. Verfahren nach einem der vorhergehenden Ansprüche, **dadurch gekennzeichnet, dass**
die durch die Flamme in das Polymermaterial eingetragene Energie im Bereich zwischen 0,25 kJ/ m² und 30 kJ/ m², besonders bevorzugt 1 kJ/ m² und 20 kJ/ m² liegt und/oder
nach Flammenbehandlung und mindestens einmaliger Beaufschlagung mit dem Aerosol das Polymermaterial gewaschen wird, insbesondere mit Wasser oder einer wässrigen Lösung oder ohne Waschbehandlung weiter verarbeitet wird.

10. Polymermaterial, insbesondere Folie oder eines Formteils, mit einer modifizierten Oberfläche, wobei
an der Oberfläche eine Schicht mindestens eines Reaktivstoffs ausgebildet ist, wobei der mindestens eine Reaktivstoff an der Oberfläche gebunden ist und/oder als Schicht vernetzter Reaktivstoffmoleküle ausgebildet ist, und/oder
eine Trockenschichtdicke des gebundenen Reaktivstoffs an der Oberfläche des Polymermaterials von 0,05 bis 100 nm, bevorzugt von 0,1 bis 50 nm, besonders bevorzugt von 0,5 bis 10 nm beträgt,
wobei das Polymermaterial bevorzugt durch ein Verfahren nach einem der Ansprüche 1 bis 9 herstellbar ist.

11. Vorrichtung zur Modifikation von Oberflächen von Polymermaterialien, umfassend
mindestens eine Beflammungszone, in der eine Aktivierung einer Oberfläche eines Polymermaterials mittels Flammenbehandlung und/oder eine Initiierung des mindestens einen Reaktivstoffs durchgeführt werden kann, und
mindestens eine Behandlungszone, in der eine mindestens einmalige Behandlung der Oberfläche des Polymermaterials mit einer Flüssigkeit, insbesondere einem Aerosol durchgeführt werden kann.

12. Vorrichtung nach vorhergehendem Anspruch, **dadurch gekennzeichnet, dass**
die Beflammungszone mindestens einen Beflammungskopf (1) und/oder
die mindestens eine Behandlungszone mindestens einen Aerosolgenerator (2)
umfasst.

13. Vorrichtung nach einem der beiden vorhergehenden Ansprüche, **dadurch gekennzeichnet, dass** die Behandlungszone einseitig oder beidseitig der Beflammungszone ausgebildet ist.

14. Vorrichtung nach einem der Ansprüche 11 bis 13, weiter umfassend mindestens ein Transportsystem (3, 4, 5) zum Transport des Polymermaterials durch die Beflammungszone und die mindestens eine Behandlungszone, wobei das Transportsystem (3, 4, 5) bevorzugt
einen Substrathalter (3) zur Halterung des Polymermaterials sowie ein Linear-Transportsystem (4) zum Bewegung des Substrathalters durch die Beflammungszone und die mindestens eine Behandlungszone, oder
eine Rolle (5) zum kontinuierlichen Lenken eines als Folie (6) ausgebildeten Polymermaterials durch die Beflammungszone und die mindestens eine Behandlungszone umfasst.

15. Verfahren zur Beschichtung von Oberflächen von Polymermaterialien, bei dem zunächst ein Verfahren zur Modifikation von Oberflächen von Polymermaterialien nach einem der Ansprüche 1 bis 9 durchgeführt wird und im Anschluss die modifizierte Oberfläche mit mindestens einem Beschichtungsstoff beschichtet wird, wobei bevorzugt der Beschichtungsstoff ausgewählt ist aus der Gruppe bestehend aus Lacken, Klebstoffen, Tinten, Laminierfolien, Metallen sowie Kombinationen hiervon.
